# EUROPÄISCHE PATENTSCHRIFT

(11) **EP 3 292 012 B1**
(45) Veröffentlichungstag und Bekanntmachung des Hinweises auf die Patenterteilung: **07.04.2021**
(21) Anmeldenummer: 16736759.8
(22) Anmeldetag: 04.05.2016
(51) Int. Cl.: B60J 7/10

(54) **VORRICHTUNG ZUR BEFESTIGUNG EINER PLANE, INSBESONDERE AUF EINEM LKW-AUFBAU**
DEVICE FOR FASTENING A TARPAULIN, IN PARTICULAR ON A LORRY BODY
DISPOSITIF DE FIXATION D'UNE BÂCHE, EN PARTICULIER SUR UNE STRUCTURE DE CAMION

(30) Priorität: 04.05.2015 AT 503562015
(43) Veröffentlichungstag der Anmeldung: 14.03.2018
(73) Patentinhaber: Schuh, Rainer Karl, 2700 Wiener Neustadt (AT)
(72) Erfinder: Schuh, Rainer Karl, 2700 Wiener Neustadt (AT)
(74) Vertreter: Patentanwälte Barger, Piso & Partner
(86) Internationale Anmeldenummer: PCT/AT2016/050126
(87) Internationale Veröffentlichungsnummer: WO 2016/176709

(56) Entgegenhaltungen:
- DE-A1-102013 012 386
- US-A- 3 172 419
- US-A- 4 399 640
- US-A- 6 053 558

## Beschreibung

Die Erfindung betrifft eine Vorrichtung zur Befestigung einer Plane auf einem Rahmen oder einem Container oder, bevorzugt, auf einem LKW-Aufbau entsprechend dem Oberbegriff des Anspruches 1 und der DE 10 2013 012 386 A1.

Diese Druckschrift offenbart ein Befestigungssystem, bei dem der Rand einer Plane zwischen einem ortsfesten Rahmenprofil und einer Klemmleiste fixiert wird. Die Klemmleiste selbst wird durch Einschnappen eines Hakens in eine Hinterschneidung des Rahmenprofils gehalten und gegen die Plane gedrückt. Die Montage einer solchen losen Plane ist extrem aufwändig und bedarf mehrerer Helfer, da bis zum Schluss alle enden der Plane gehalten werden müssen.

Aus der US 6,053558 A ist es bekannt, den Rand einer Plane mit einer Klemmleiste dauerhaft zu verbinden und die Klemmleiste, die auf der Planenseite eine kreisbogenförmige Verdickung aufweist, mit dieser Verdickung in eine kreisbogenförmige Nut eines Rahmenprofils einzubringen und zu verdrehen, bis eine Ausbuchtung mit Haken durch eine hinterschnittene Öffnung gelangt und sich passend verhakt. Die Handhabung ist zwar gegenüber der erstgenannten Druckschrift verbessert, doch ist die Handhabung (und Aufbewahrung) der Plane mit den festen Klemmleisten an zumindest drei Rändern der Plane alles andere als einfach.

Ein damit ähnliches Modell offenbart die US 3,172,419 die eine Plane, die an einem ihrer Ränder fest an einem Boot befestigt ist, am dazu gegenüberliegenden Rand mit einer Klemmleiste wie der vorgenannten dauerhaft versieht und die beiden anderen Ränder mit unterschiedlichen Befestigungsmitteln ausstattet. Beim Verzicht auf die dauerhafte Befestigung an einem der Ränder treten die gleichen Probleme wie bei der vorstehend genannten Druckschrift auf.

Ein gänzlich anderes Befestigungssystem ist aus der US 4,399,640 zur Verbesserung der thermischen Isolierung von Fenstern bekannt. Dort wird ein durchsichtiges flexibles Material auf Leisten, die einen Rahmen bilden, geklebt und dieser wird, normal zur Rahmenfläche, auf einen Tragrahmen aufgeklippst. Der Tragrahmen wiederum besteht aus rund um das Fenster fest montierten Profilen, die einander entgegengesetzt angeordnete Nuten aufweisen. In diese Nuten wird ein bogenförmiges Zwischenprofil eingehängt und durch elastische Deformation aufgeklippst. Das Zwischenprofil wiederum trägt eine kreisbogenförmige Leiste, auf die die Profile, die den Rahmen bilden, aufgeklippst werden. Eine solche Konstruktion ist für fahrbare Unterlagen, wie LKW-Aufbauten, Container, etc. nicht geeignet, und auch nicht für größere Flächen als Fenster. Dazu kommt, dass das Zwischenprofil einen zusätzlichen Aufwand erfordert, und dass die Handhabung und Aufbewahrung des Rahmens extrem schwierig ist.

Es gibt noch andere, unterschiedlichste Systeme und Vorrichtungen zu diesem Zweck, es wird nur kurz auf die folgenden verwiesen:
Die GB 2 433 153 offenbart ein Rahmenprofil und ein Planenprofil und fordert zwingend, dass zwischen diesen Profilen ein elastisch deformierbares, etwa U-förmiges, Halteprofil eingelegt wird, was eine aufwändige Tätigkeit darstellt, wobei dieses Halteprofil in seiner Handhabung und auch Lagerung großer Sorgfalt bedarf, die im rauen Alltagsbetrieb schwer zu gewährleisten ist.

Die WO 2008/116231 zeigt in ihren einerseits sehr genauen, andererseits aber offensichtlich extrem schematischen Bildern eine Halterung, die in der Richtung normal zur Planenebene relativ hoch baut und daher insbesondere für LKW-Aufbauten schwer brauchbar ist. Dazu kommt, dass auch hier ein zusätzlicher leistenartiger Halteteil über die gesamte Länge der Plane in eine Nut eingebracht und gehandhabt werden muss, was einen großen Aufwand darstellt.

Die US 3,928,897 wiederum offenbart die Verwendung einer über die gesamte Länge bzw. Höhe vorgespannten Planenhalterung, die gegenüber dynamischen Belastungen keine ausreichende Festigkeit aufweist und nur für die Verwendung im Inneren von Gebäuden geeignet ist.

Die auf den Anmelder zurückgehende AT 413 364 ist weist neben dem Rahmenprofil und dem Planenprofil noch ein Zwischenprofil als Kern der dortigen Erfindung zwingend auf, ist daher in der Produktion, aber auch bei der Montage - Demontage aufwändig.

Die FR 1 467 374 ist ähnlich wie die US 3,928,897 ausgebildet, und weist auch die dort genannten Nachteile auf.

Die Befestigung von Planen aus Gründen der Werbung, der Information oder auch des Schutzes von dahinterliegenden Bereichen auf den oben genannten Gegenständen, aber auch auf anderen, ist seit langem bekannt und erfolgt zumeist, aber nicht ausschließlich, mittels Spannrahmen. Man versucht ganz allgemein, diese Rahmen möglichst unauffällig und dennoch mechanisch stabil auszugestalten, bei der Montage auf Aufbauten von LKWs, deren Anhängern oder Sattelschleppern wird eine solche möglichst flache Ausbildung durch die verschiedenen gesetzlichen Bestimmungen in den einzelnen Staaten imperativ. Bei den anderen Anwendungsgebieten ist eine solche Ausbildung im hohen Maße wünschenswert.

Es ist somit Ziel der Erfindung, eine derartige Halterung anzugeben, die bei unterschiedlichen Montagesituationen verwendet werden kann und die die Nachteile der Ausbildungen gemäß dem Stand der Technik nicht aufweist.

Erfindungsgemäß erreicht man diese Ziele durch die im kennzeichnenden Teil das Anspruches 1 angegebenen Merkmale, mit anderen Worten dadurch, dass am Untergrund ein Rahmenprofil befestigt ist, das mit einem Planenprofil zusammenwirkt, wobei die Plane selbst bzw. eine Planenhalterung bzw. ein Keder der Plane, auf beliebige, im Stand der Technik bekannte, Weise mit dem Planenprofil verbunden ist.

Dabei beruht die Erfindung auf der Erkenntnis, dass die Verbindung zwischen Rahmenprofil und Planenprofil den mechanischen Anforderungen genügt, wenn das Planenprofil durch eine Dreh-Schiebe-Bewegung in das Rahmenprofil einzubringen ist, wenn dabei eine elastische Deformation zumindest eines Teils bzw. Bereiches zumindest eines der beiden Profile, gegebenenfalls im Kontaktbereich, erfolgt, und wenn im montierten Zustand in zumindest einem nicht elastisch deformierten Bereich des Kontaktes zwischen dem Rahmenprofil und dem Planenprofil ein formschlüssiger Kontakt herrscht.

Unter "elastische Deformation" wird in diesem Zusammenhang nicht die bei jedem Kontakt fester Körper unter einer Last auftretende, quasi unvermeidliche, infinitesimale Deformation verstanden, und auch nicht eine, die knapp an die plastische Deformation heranreicht, sondern eine dazwischen, sozusagen zumindest annähernd im Dauerfestigkeitsbereich liegende Deformation, wie sie der Fachmann auf dem Gebiete der Herstellung von Schnappverbindungen bzw. von Profilen nach dem Studium der Beschreibung und der Zeichnung, gegebenenfalls anhand einiger Versuche leicht bemessen kann.

Die Erfindung wird im Folgenden anhand einiger Beispiele näher erläutert. Dabei zeigt bzw. zeigen
die Figs. 1 bis 4 nicht erfindungsgemäße Varianten, samt der Darstellung des Montageschrittes,
die Figs. 5 bis 9 eine erste erfindungsgemäße Variante, samt der Darstellung des Montageschrittes und
die Figs. 10 bis 14 eine weitere Variante in Darstellung ähnlich denen der Figs. 5 bis 9.

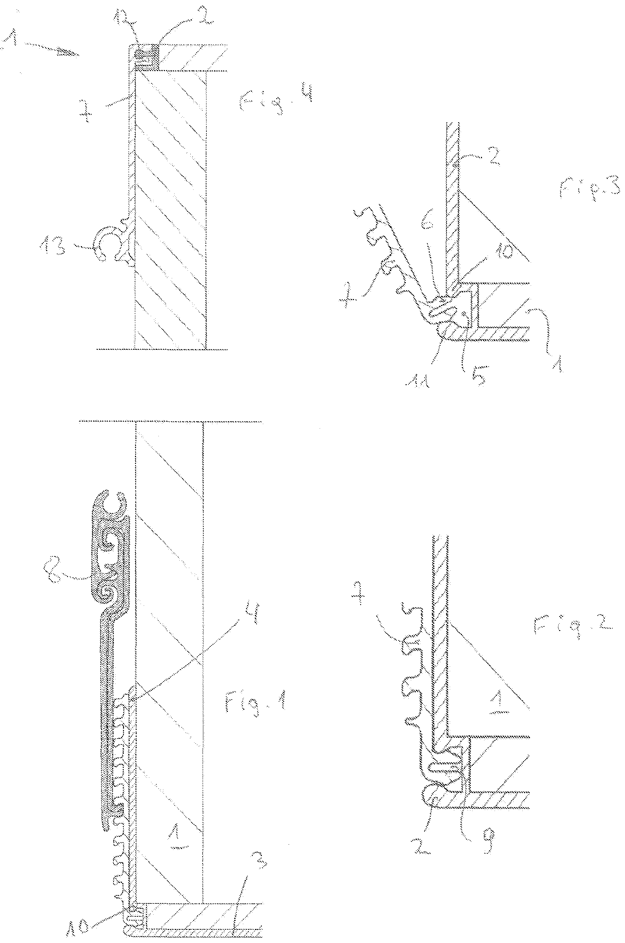

Die Figs. 1 bis 3 zeigen in einem Schnitt einen Eckbereich 1 eines Fahrzeugaufbaus, eine Gebäudeecke, die Ecke eines Rahmens, oder dergleichen. Auf dem Rahmen, in dessen Eckbereich 1 passend befestigt, ist ein Rahmenprofil 2 angeordnet. Dieses ist bevorzugt aus Kunststoff oder Aluminium hergestellt, und im dargestellten Ausführungsbeispiel umgreift es mit zwei Flügeln 3 und 4 den Eckbereich 1. Im direkten Eckbereich befindet sich dabei eine hinterschnittene Nut 5, die erfindungsgemäß mit einem Kopf 6 eines Planenprofils 7 zusammenwirkt und dieses hält.

In Fig. 1 ist eine aus dem Stand der Technik bekannte Planenhalterung 8 mit dem Planenprofil 7 lösbar verbunden dargestellt, es kann jede andere Art von Planenhalterung aus dem Stand der Technik verwendet werden, die entsprechenden Bereiche des Planenprofils 7 sind in Kenntnis der zu verwendenden Planenhalterung 8 leicht an diese anzupassen.

Die Fig. 3 und die Fig. 2 zeigen die Montage bzw. Befestigung des Planenprofils 7 im Rahmenprofil 2: Wie die Fig. 3 zeigt (Bezugszeichen bei Fig. 2) wird der mit einem Schlitz 9 versehene Kopf 6 des Planenprofils schräg in die hinterschnittene Nut eingeführt und sodann, unter elastischer Deformation beider Kopfteile im und um den Kontaktbereich, in die Nut 5 eingeschwenkt, wobei in geringem Ausmaß auch eine Schiebebewegung in Richtung des Flügels 4 des Rahmenprofils 2 erfolgt. Bemerkenswert ist, dass erfindungsgemäß der Übergang zwischen dem geraden Abschnittes des Planenprofils 7 und der diesem Abschnitt nächstliegende Teil des Kopfes 6 im montierten Zustand formschlüssig an einem Vorsprung 10 des Rahmenprofils zu liegen kommen. Im Vergleich dazu weisen der andere Teil des Kopfes 6, jenseits des Schlitzes 9 gelegen, und die äußere Verdickung 11 des Rahmenprofils 2 nur eine schmale Berührfläche auf, die im Vergleich zu der erstgenannten Berührfläche linienförmigen Charakter aufweist, und deren Lage durch das jeweilige Ausmaß der elastischen Verformung bestimmt wird.

Die Fig. 4 weist eine andere Form von Rahmenprofil 2 und damit auch von Planenprofil 7 für eine ganz ähnlich aufgebaute Ecke 1 auf, es ist nur ein L-förmiges Rahmenprofil 2 mit einem schienenförmigen oder pilzförmigen Steg vorgesehen, das mit einem Planenprofil 7 zusammenwirkt, das den Steg 12, insbesondere auf seiner Außenseite, großteils flächenschlüssig, mittels einer hinterschnittenen Nut mit passendem Querschnitt, umfasst. Beim Einsetzen des Planenprofils 7 im bzw. auf das Planenprofil 2 erfolgt nur eine sehr geringe laterale Bewegung, der formschlüssige Halt ist auch hier durch die elastische Deformation in einem anderen Bereich der Verbindung gegeben, sodass er mittels zweier praktisch unverformter Flächen erreicht wird. Das Planenprofil 7 ist in diesem Ausführungsbeispiel mit einem Kederhalter 13 versehen.

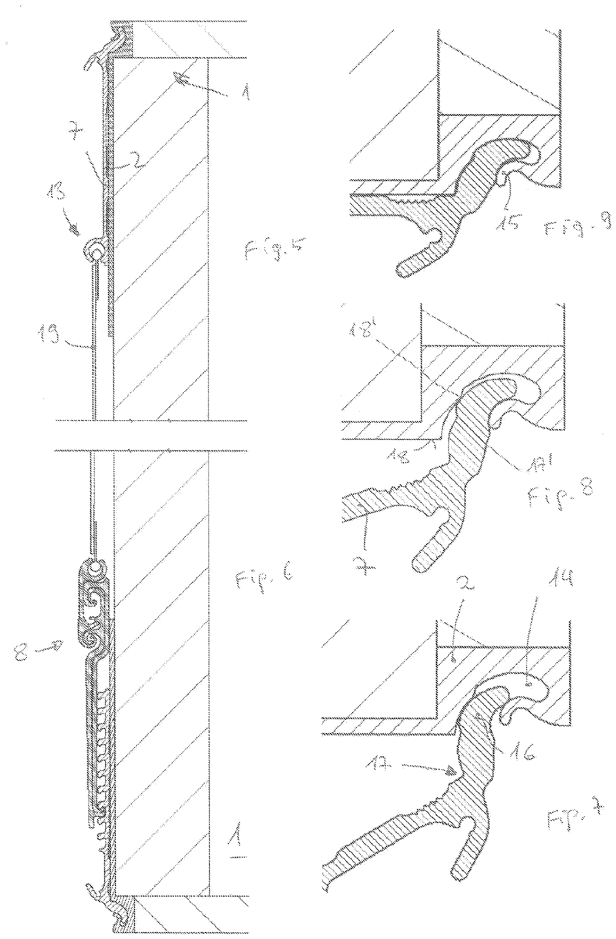

Wenn man sich, nur beispielsweise, zwischen dem Kederhalter 13 der Fig. 4 und der Planenhalterung 8 der Fig. 1 die Plane denkt, und die in ihr wirkenden Zugkräfte mit ihrer Wirkung auf die Verbindung zwischen Rahmenprofil 2 und Planenprofil 7 untersucht, so stellt man fest, dass die Kraftübertragung bei der Variante nach Fig. 1 im Wesentlichen über den Vorsprung 10 und den daran formschlüssig anliegenden Teil des Kopfes 6 des Planenprofils (Fig. 3) erfolgt, und dass bei der Variante gemäß der Fig. 4 diese Kraftübertragung vom Äußeren Teil des Kopfes der Planenhalterung über eine vergleichsweise große Fläche auf den schienenförmigen Steg 12 ebenfalls im formschlüssigen Kontakt übertragen wird. Diese Übertragung der Kräfte über formschlüssig miteinander verbundene Teile sichert eine feste Verbindung trotz ihres geringen geometrischen Ausmaßes, auch unter schwierigen Bedingungen. Das gleiche gilt für die in Figs. 5 bis Fig. 9 dargestellte erfindungsgemäße Variante, bei der ein Rahmenprofil 2 wiederum an der Ecke 1 eines Aufbaus oder dergleichen montiert ist, hier allerdings anders als bei den ersten beiden Varianten ausgebildet ist, nämlich mit einer insbesondere aus den Figs. 7-9 gut ersichtlichen Ausbildung mit einem krummen Schlitz und einer entsprechend elastischen deformierbaren äußeren Lippe 15. Mit diesem Schlitz 14 wirkt eine Zunge 16 des Planenprofils 7 zusammen: Bei der in den Figura 7, 8 und 9 dargestellten Befestigungsbewegung kommt es einerseits zu einer Drehung, andererseits zu einer geringfügigen Verschiebung, bis die montierte Position entsprechend der Fig. 9 erreicht ist. Auch hier wird wieder ein formschlüssiger Kontakt zwischen der Innenseite einer Ecke 17 des Planenprofils einerseits und der äußeren Ecke 18 des Rahmenprofils 2 andererseits so erreicht, dass die nach außen ragende Ecke 18 (daher ihre Bezeichnung) von der nach innen gerichteten Ecke 17 (daher auch deren Bezeichnung) formschlüssig über einen gewissen Bereich berührt wird, ohne dass in diesem Bereich eine merkliche elastische Deformation vorliegt. Diese ist im Wesentlichen in der äußeren Lippe 15, im Kontaktbereich, induziert, die somit (bei der vorliegenden Darstellung) eine Kraft in Richtung schräg von rechts unten nach links oben auf das Planenprofil ausübt.

Im dargestellten Ausführungsbeispiel ist als weiteres Halteelement eine Kante 18' am Rahmenprofil und eine Furche 17' am Planenprofil vorgesehen, die im montierten Zustand (Fig. 9) formschlüssig zusammenkommen. Der tatsächlich formschlüssige Kontakt erstreckt sich von etwas links der äußeren Ecke 18 (ungefähr dort, wo das zugehörige Bezugszeichen den Eckenbereich trifft), bis etwas rechts über die Kante 18' hinaus.

Aus Figs. 5 und 6 sind wiederum die Ausbildungen der Planenhalterung 8 bzw. des Kederhalters 13 als Beispiel dargestellt, wenn man nun die Zugkraft in der hier eingezeichneten Plane 19 mit ihrer Wirkung auf die Verbindung in den Ecken 1 betrachtet, so erkannt man, dass trotz der anscheinend nicht sehr stabilen Verbindung durch die Kombination von formschlüssigem Kontakt und kraftschlüssiger Halterung durch die äußere Lippe 15 eine mechanisch sehr stabile Verbindung erreicht ist.

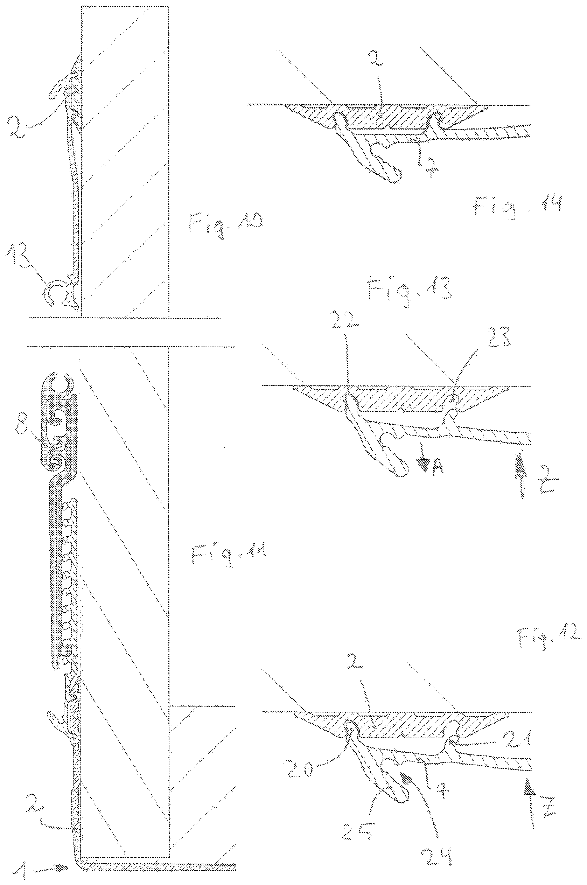

Die Ausbildungsform nach Figs. 10 und 11 zeigt miteinander verwandte Varianten: Die nach Fig. 11 reicht mit dem Rahmenprofil 2 um den Eckbereich 1 eines Aufbaus, die nach Fig. 10 ist, ganz im Gegenteil, mit einem Rahmenprofil ausgestattet, das zu einem nur auf einer Oberfläche des Aufbaus anzubringenden, im Wesentlichen geradlinig verlaufenden Profil geworden ist. Dennoch wird in beiden Fällen die erfindungsgemäße Verbindung zwischen dem jeweiligen Rahmenprofil 2 und dem zugehörigen Planenprofil 7 erfüllt: Dies zeigen insbesondere die Figs. 12 bis 14, aus denen ersichtlich ist, dass das Planenprofil 7 durch einen Druck in Richtung des Pfeiles Z (Z für Zudrücken) in seinem mittleren Bereich (somit nicht in einem Kontaktbereich, wie die anderen Ausführungsformen) leicht elastisch verbogen wird, wie der kleine Aufspreizpfeil A (der mehr die elastische Deformation als eine Kraft angeben soll) indiziert. Es kommt so zu einer gewissen Krümmung des Planenprofils 7 in diesem zwischen den Leisten 20, 21 liegenden Bereich, sodass es neben der Schwenkbewegung zwischen der Fig. 12 und der Fig. 14 auch zu einer geringen Verschiebung bzw. Stauchung kommt, bis die Halteleiste 21 in die Haltenut 23 gelangt und in ihr im Wesentlichen formschlüssig und nicht deformiert, zu liegen kommt.

Wenn in die leicht gekrümmten Nuten 22, 23 ganz approximativ Symmetrieebenen gelegt werden, so schneiden diese sich im Freien, außerhalb des Planenprofils, wenn dieses montiert ist.

Das Öffnen erfolgt in umgekehrter Reihenfolge, wobei bevorzugt ein keilförmiges Werkzeug (nicht dargestellt) in den durch eine Nase 25 gebildeten Demontageschlitz 24 eingeführt wird, um durch Verdrehen (im dargestellten Beispiel im Uhrzeigersinn) das Krümmen des Planenprofils und damit das "Herausquarren" der Halteleiste 21 aus der Haltenut 23 zu bewirken. Bei den üblichen größeren Längen der Profile in axialer Richtung ist es möglich, durch das axiale Verschieben des Werkzeugs im Demontageschlitz 24 das Öffnen in einem Zug sukzessive zu bewirken.

Die Nase 25 und der Demontageschlitz 24 sind in der Zeichnung rein schematisch dargestellt und können in weitem Umfang und in Abhängigkeit von der Form das Werkzeuges variiert und abgeändert werden. Bedeutsam ist, dass durch das Wegspreizen der Nase 25 beim Öffnen der Bereich des Planenprofils 7 zwischen den beiden Leisten 22, 23, aufgebogen wird, bis die Halteleiste 21 aus der Haltenut 23 gleitet. Dazu ist eine Ausbildung der Nase mit merklicher Dicke günstig, da so die induzierte Deformation nicht die Nase, sondern das Profil elastisch verbiegt. Diese Dreh- Schiebebewegung samt elastischer Deformation führt zufolge der Orientierung der Haltenut 23 und der Führungsnut 22, deren Mittelebenen, wie auch immer definiert, sich im leeren Raum auf der Seite "oberhalb" des Untergrundes, auf dem das Rahmenprofil 2 befestigt ist, schneiden, zum gewünschten Demontieren des Planenprofils 7.

Im montierten Zustand ist der Bereich um Haltenut 23 und Halteleiste 21 nicht merklich elastisch deformiert und bildet den erfindungsgemäßen formschlüssigen Kontaktbereich aus, der für die zuverlässige Halterung des Planenprofils und somit auch der Plane bedeutsam ist.

Die Figs. 10 und 11 stellen wiederum, wie auch bei den vorher besprochenen Varianten, die Montage in einem Eckbereich 1 bzw auf einer ebenen Oberfläche dar und bedürfen nach dem bereits Gesagten wohl keiner näheren Erläuterung.

Die dargestellten und besprochenen Profile können verschiedentlich abgewandelt werden, für den Fachmann auf dem Gebiete des Spannrahmenbaus ist dies in Kenntnis der Erfindung kein Problem. Als Material für die einzelnen Bauteile für die Rahmenprofile kommen, wie zum Teil bereits erwähnt, Aluminium, aber auch Stahl, insbesondere Edelstahl in Frage, auch hochwertiger Kunststoff, man denke nur an dessen Verwendung auch auf dem Gebiet der Waffenherstellung, ist einsetzbar. Die Planenprofile 7 können insbesondere bei der Variante gemäß den Figs. 5 bis 9 aus Aluminium oder anderem Metall, aber auch aus (faser-) verstärktem Kunststoff bestehen, bei den anderen dargestellten Profilen ist Kunststoff wegen der stärkeren Deformation bei der Montage-Demontage vorteilhaft. Es ist hier aber darauf hinzuweisen, dass bei der Verwendung entsprechend widerstandsfähigerer Materialen durch eine Anpassung der Geometrie und damit durch entsprechende Begrenzung der bei der Montage/Demontage notwendigen Verformungen die auftretenden Kräfte und Spannungen, somit Belastungen, für beide Arten von Profil bzw. alle Arten von verwendetem Material so beschränkt werden können, dass der der Erfindung zugrunde liegende Effekt auftritt, und so das erfindungsgemäße Ziel erreicht wird.

### Bezugszeichenliste:

| | | | |
|---|---|---|---|
| 01 | Rahmenecke | 15 | Äußere Lippe |
| 02 | Rahmenprofil | 16 | Zunge |
| 03 | Flügel | 17 | Innenecke |
| 04 | Flügel | 18 | Außenecke |
| 05 | Nut | 19 | Plane |
| 06 | Kopf | 20 | Führungsleiste |
| 07 | Planenprofil | 21 | Halteleiste |
| 08 | Planenhalterung | 22 | Führungsnut |
| 09 | Schlitz | 23 | Haltenut |
| 10 | Vorsprung | 24 | Demontageschlitz |
| 11 | Äußere Verdickung | 25 | Nase |
| 12 | Steg | 17' | Furche |
| 13 | Kederhalter | 18' | Kante |
| 14 | Krummer Schlitz | | |

## Patentansprüche

1. Vorrichtung zur Befestigung einer Plane auf einem Rahmen oder einem Container oder, bevorzugt, auf einem LKW-Aufbau, oder ähnlichem, mit einem am Rahmen (1) zu befestigendem Rahmenprofil (2) und einem damit zusammenwirkenden, lösbar mit ihm verbindbaren, eine Verbindung für eine Planenhalterung (8) oder einen Kederhalter (13) aufweisenden Planenprofil (7), wobei:
a) das Planenprofil (7) durch eine Dreh-Schiebe-Bewegung in das Rahmenprofil (2) einbringbar ist,
b) wobei eine elastische Deformation zumindest eines Teils bzw. Bereiches zumindest eines der beiden Profile (2, 7), gegebenenfalls im Kontaktbereich, erfolgt, wobei
c) im montierten Zustand in zumindest einem nicht elastisch deformierten Bereich des Kontaktes zwischen dem Rahmenprofil (2) und dem Planenprofil (7) ein formschlüssiger Kontakt besteht,
**dadurch gekennzeichnet, dass**
d) entweder das Rahmenprofil (2) einen krummen Schlitz (14, 22) aufweist, in den eine krumme Zunge (16, 20) des Planenprofils (7) drehend eingeschoben werden kann, dass eine äußere Lippe (15) des Rahmenprofils (2) an der Zunge (16, 20) federnd anliegt, und dass der formschlüssige Kontakt annähernd gegenüber der Lippe (15) im Bereich einer Innenecke (17) des Planenprofils (7) und einer Außenecke (18) des Rahmenprofils (2) vorgesehen ist; **oder,** dass das Rahmenprofil (2) eine schräg zur Rahmenoberfläche und bevorzugt gekrümmt verlaufende Haltenut (23) und eine anders schräg und bevorzugt gekrümmt verlaufende Führungsnut (22) aufweist, dass das Planenprofil (7) eine Halteleiste (21) und eine Führungsleiste (20) aufweist, die in die ihnen zugeordneten Nuten (23, 22) unter elastischer Deformation des zwischen ihnen liegenden Bereiches des Planenprofils mittels einer Dreh-Schiebe-Bewegung eingebracht werden können, und dadurch, dass der formschlüssige Kontakt auf der der Plane (19) zugewandten Haltenut (23) auf der der Plane (19) zugewandten Nutwand vorgesehen ist.

2. Vorrichtung nach Anspruch 1 mit einer Innenecke (17), **dadurch gekennzeichnet, dass** das Rahmenprofil (2) im Bereich innerhalb des formschlüssigen Kontaktes eine Kante (18') aufweist, die im montierten Zustand des Planenprofils (7) von einer Furche (17') flächig kontaktiert wird.

3. Vorrichtung nach Anspruch 1 mit einer Haltenut (23), **dadurch gekennzeichnet, dass** gemittelte Symmetrieebenen der Nuten (22, 23) einander im Freien schneiden.

4. Vorrichtung nach Anspruch 3, **dadurch gekennzeichnet, dass** das Planenprofil (7) im Bereich der Führungsleiste (20) eine Nase (25) aufweist, durch die ein Demontageschlitz (24) zwischen dem Profil (7) und der Nase (25) gebildet wird.

5. Vorrichtung nach Anspruch 4, **dadurch gekennzeichnet, dass** die Dicke der Nase (25) größer ist als die Dicke des Planenprofils (7) im Bereich zwischen den beiden Leisten (20, 21).

## Claims

1. Device for fastening a tarpaulin on a frame or a container or, preferably, on a lorry body or the like, comprising a frame profile (2) to be fastened to the frame (1) and a tarpaulin profile (7) which interacts with said frame profile and is releasably connectable thereto and has a connection for a tarpaulin holder (8) or a piping holder (13),
a) it being possible for the tarpaulin profile (7) to be introduced into the frame profile (2) by a turn-and-slide movement,
b) at least a part or a region of at least one of the two profiles (2, 7) being elastically deformed, optionally in the contact region,
c) there being, in the mounted state, a form-fitting contact in at least one non-elastically deformed region of the contact between the frame profile (2) and the tarpaulin profile (7),
**characterised in that**
d) either the frame profile (2) has a curved slot (14, 22) into which a curved tongue (16, 20) of the tarpaulin profile (7) can be inserted in a rotating manner, **in that** an outer lip (15) of the frame profile (2) bears resiliently against the tongue (16, 20), and **in that** the form-fitting contact is provided approximately opposite the lip (15) in the region of an inner corner (17) of the tarpaulin profile (7) and an outer corner (18) of the frame profile (2);
or **in that** the frame profile (2) has a holding groove (23) extending obliquely to the frame surface, preferably in a curved manner, and a guide groove (22) extending differently obliquely, preferably in a curved manner, **in that** the tarpaulin profile (7) has a holding strip (21) and a guide strip (20) which can be introduced into the grooves assigned to said strips (23, 22) under elastic deformation of the region of the tarpaulin profile between said strips by means of a turn-and-slide movement, and **in that** the form-fitting contact is provided on the holding groove (23) facing the tarpaulin (19), on the groove wall facing the tarpaulin (19).

2. Device according to claim 1 comprising an inner corner (17), **characterised in that** the frame profile (2) has an edge (18') in the region within the form-fitting contact, which edge, in the mounted state of the tarpaulin profile (7), is contacted in a 2-dimensional manner by a channel (17').

3. Device according to claim 1 comprising a holding groove (23), **characterised in that** averaged planes of symmetry of the grooves (22, 23) intersect with one another in the open.

4. Device according to claim 3, **characterised in that** the tarpaulin profile (7) has a projection (25) in the region of the guide strip (20), by means of which projection a dismantling slot (24) is formed between the profile (7) and the projection (25).

5. Device according to claim 4, **characterised in that** the thickness of the projection (25) is greater than the thickness of the tarpaulin profile (7) in the region between the two strips (20, 21).

## Revendications

1. Dispositif pour la fixation d'une bâche à un cadre ou un container ou, de préférence, à une structure de camion ou autre, avec un profilé de cadre (2) à fixer au cadre (1) et un profilé de bâche (7) interagissant avec celui-ci, pouvant être relié avec celui-ci de manière amovible et comprenant une liaison pour un support de bâche (8) ou un support à bourrelet (13), dans lequel :
a) le profilé de bâche (7) peut être introduit, par un mouvement de rotation et poussée, dans le profilé de cadre (2),
b) dans lequel une déformation élastique d'au moins une partie respectivement zone d'au moins un des deux profilés (2, 7), a lieu, le cas échéant, dans la zone de contact, dans lequel
c) dans l'état monté, dans au moins une zone non déformée élastiquement du contact entre le profilé de cadre (2) et le profilé de bâche (7), il existe un contact par complémentarité de forme,
**caractérisé en ce que**
d) soit le profilé de cadre (2) présente une fente incurvée (14, 22), dans laquelle une languette incurvée (16, 20) du profilé de bâche (7) peut être insérée de manière rotative, **en ce qu'**une lèvre externe (15) du profilé de cadre (2) s'appuie contre la languette (16, 20) et **en ce que** le contact par complémentarité de forme est disposé approximativement en face de la lèvre (15) au niveau d'un angle interne (17) du profilé de bâche (7) et d'un angle externe (18) du profilé de cadre (2) ;
soit **en ce que** le profilé de cadre (2) présente une rainure de maintien (23) s'étendant de manière oblique par rapport à la surface du cadre et de préférence de manière incurvée et une rainure de guidage (22) s'étendant de manière oblique avec un angle différent et de préférence de manière incurvée, **en ce que** le profilé de bâche (7) comprend une barre de maintien (21) et une barre de guidage (20), qui peuvent être insérées dans leurs rainures (23, 22) correspondantes avec une déformation élastique de la zone, se trouvant entre elles, du profilé de bâche au moyen d'un mouvement de rotation et de poussée, et **en ce que** le contact par complémentarité de forme est disposé sur la rainure de maintien (23) orientée vers la bâche (19), sur la paroi de la rainure orientée vers la bâche (19).

2. Dispositif selon la revendication 1, avec un angle interne (17), **caractérisé en ce que** le profilé de cadre (2) comprend, à l'intérieur du contact par complémentarité de forme, une arête (18') qui, dans l'état monté du profilé de bâche (7), est mis en contact sur toute sa surface avec un sillon (17').

3. Dispositif selon la revendication 1, avec une rainure de maintien (23), **caractérisé en ce que** les plans de symétrie moyennés des rainures (22, 23) se coupent entre eux à l'air libre.

4. Dispositif selon la revendication 3, **caractérisé en ce que** le profilé de bâche (7) comprend, au niveau de la barre de guidage (20), un embout (25), grâce auquel une fente de démontage (24) est formée entre le profilé (7) et l'embout (25).

5. Dispositif selon la revendication 4, **caractérisé en ce que** l'épaisseur de l'embout (25) est supérieure à l'épaisseur du profilé de bâche (7) dans la zone entre les deux barres (20, 21).
